# EUROPÄISCHE PATENTANMELDUNG

(11) **EP 0 677 722 A2**
(43) Veröffentlichungstag der Anmeldung: **18.10.1995**
(21) Anmeldenummer: 95104433.8
(22) Anmeldetag: 25.03.1995
(51) Int. Cl.: G01F 1/66, G01F 15/12, G01F 15/00, G01P 1/00

(54) **Rohrleitungs-Pass-Stück, insbesondere für opto-elektronische Volumenstrom-Messungen in Rohrleitungen**

(30) Priorität: 14.04.1994 DE 9406196 U
(71) Anmelder: Gier & Partner GmbH, D-40789 Monheim (DE)
(72) Erfinder: Gier, Hans-Peter, D-40721 Hilden (DE)
(74) Vertreter: Sroka, Peter-Christian, Dipl.-Ing.

(57) **Zusammenfassung**

Ein Rohrleitungs-Pass-Stück, insbesondere für opto-elektronische Volumenstrom-Messungen in Rohrleitungen. Es besitzt einen am Rohrleitungsmantel angeordneten Flanschstutzen (2, 3) zum Anbringen einer transparenten oder durchsichtigen Scheibe (9). Am Flanschstutzen (2, 3) ist ein Schieber (5) mit einer senkrecht zur Flanschöffnung verschiebbaren Schieberplatte (6) angeflanscht, und die Scheibe (9) ist am vorderen Ende eines in Richtung der Flanschöffnungsachse beweglichen, eine Scheibenhalterung bildenden Rohrstückes (8) angebracht. Durch die Anordnung wird erreicht, daß eine Reinigung bzw. ein Auswechseln der Scheibe ohne Unterbrechung der Fluidströmung durch die Rohrleitung durchgeführt werden kann.

## Beschreibung

Die Erfindung betrifft ein Rohrleitungs-Pass-Stück, insbesondere zur Durchführung von optoelektronischen Volumenstrom-Messungen in Rohrleitungen, mit mindestens einem am Rohrleitungsmantel angebrachten Flanschstutzen zum Anbringen einer transparenten oder durchsichtigen Scheibe.

Rei bekannten Rohrleitungs-Pass-Stücken dieser Art ist die transparente oder durchsichtige Scheibe mittels eines Flanschstückes unmittelbar an dem Flanschstutzen befestigt. Wenn diese Scheibe zum Reinigen oder Austauschen von dem Rohrleitungs-Pass-Stück abgenommen werden muß, wird die Flanschöffnung freigegeben, so daß vorher die Fluidströmung durch die Rohrleitung bzw. das Rohrleitungs-Pass-Stück abgeschaltet werden muß, damit das Fluid nicht durch die Flanschöffnung ausströmen kann.

Der Erfindung liegt die Aufgabe zugrunde, ein Rohrleitungs-Pass-Stück der eingangs geschilderten Art so zu gestalten, daß eine Reinigung bzw. ein Auswechseln der Scheibe ohne Unterbrechung der Fluidströmung durch die Rohrleitung durchgeführt werden kann.

Zur Lösung dieser Aufgabe ist das erfindungsgemäße Rohrleitungs-Pass-Stück dadurch gekennzeichnet, daß an dem Flanschstutzen ein Schieber mit einer senkrecht zur Flanschöffnung verschiebbaren Schieberplatte angeflanscht ist, und daß die Scheibe am vorderen Ende eines in Richtung der Flanschöffnungsachse beweglichen, eine Scheibenhalterung bildenden Rohrstückes angebracht ist.

Rei einer derartigen Konstruktion besteht die Möglichkeit, die Scheibe zusammen mit dem Rohrstück aus dem Flanschstutzen herauszuziehen, bis die Flanschöffnung anschließend mittels der Schieberplatte verschlossen werden kann. Danach kann das die Scheibe tragende Rohrstück weiter abgezogen werden, um die Scheibe entweder zu reinigen oder auszutauschen. Zum erneuten Einsetzen der Scheibe wird das Rohrstück wieder so weit in eine an der freien Seite des Schiebers angebrachten Aufnahme eingeschoben, bis gewährleistet ist, daß nach Öffnen des Schiebers durch Zurückziehen der Schieberplatte kein Fluid aus der Rohrleitung bzw. dem Rohrleitungs-Pass-Stück ausströmen kann. Nach dem abschließenden Zurückziehen der Schieberplatte werden das Rohrstück und die Scheibe wieder in die Ausgangsstellung geschoben, in der die Scheibe sich innerhalb des Flanschstückes und damit unmittelbar angrenzend an den Rohrleitungsquerschnitt befindet.

Gemäß einer vorteilhaften Ausführungsform ist der Schieber an den Flanschstutzen mittels eines ersten Flanschringes angeschraubt, an dem ein am hinteren Ende des Rohrstückes befestigter zweiter Flanschring festgeschraubt ist. Zum Herausnehmen des Rohrstückes und damit der Scheibe wird dieser zweite Flanschring von dem ersten Flanschring weggezogen, wobei das Rohrstück vorzugsweise abdichtend in dem ersten Flanschring geführt ist.

Das hintere Ende des Rohrstückes weist vorzugsweise eine Aufnahme zum Ansetzen eines opto-elektronischen Volumenstrom-Meßgerätes, zum Beispiel eines Laser-Doppler-Velocimeters, auf.

Die Erfindung wird im folgenden anhand der Zeichnung näher beschrieben:
Figur 1 zeigt im Schnitt die an einem Rohrleitungs-Pass-Stück angebrachte Konstruktion zum Ansetzen eines insbesondere opto-elektronischen Meßgerätes im Betriebszustand:
Figur 2 zeigt eine der Darstellung von Figur 1 entsprechende Darstellung, wobei anstelle des opto-elektronischen Meßgerätes ein Abziehgerät angebracht ist, um die Scheibe aus dem Flanschstutzen herauszunehmen:
Figur 3 zeigt eine der Darstellung von Figur 2 im wesentlichen entsprechende Darstellung bei bereits aus dem Flanschstutzen herausgezogener Scheibe.

Von dem erfindungsgemäßen Rohrleitungs-Pass-Stück ist in der Zeichnung nur ausschnittsweise ein Abschnitt des Rohrleitungsmantels 1 dargestellt. Das Pass-Stück kann beispielsweise an seinen beiden Enden Flanschstücke zum Einsetzen in eine Rohrleitung aufweisen.

In eine entsprechende Öffnung im Rohrleitungsmantel 1 ist ein Rohrstutzen 2 eingesetzt, an dem ein Flansch 3 befestigt ist. Rohrstutzen 2 und Flansch 3 bilden einen Flanschstutzen, an dem mittels eines ersten Flanschringes 4 ein Schieher 5 mit senkrecht zur Flanschöffnung verschiebbarer Schieberplatte 6 befestigt ist. An den ersten Flanschring 4 ist ein weiterer Flanschring 7 anschraubbar, der an dem hinteren Ende eines Rohrstückes 8 befestigt ist, in dessen vorderes Ende eine transparente oder durchsichtige Scheibe 9 mittels eines Befestigungsringes 10 eingesetzt ist. Das hintere Ende des Rohrstückes 9 ist mit einer geeigneten Aufnahme zum Anbringen eines Meßgerätes 11, zum Beispiel eines opto-elektronischen Volumenstrom-Meßgerätes, insbesondere Laser-Doppler-Velocimeters, versehen ist. Die Linien 12 repräsentieren die in das Innere des Rohrleitungs-Pass-Stückes eintretenden Meßstrahlen, die über das Meßgerät und gegebenenfalls angeschlossene Auswertkreise zur Messung der Volumenströmung herangezogen werden.

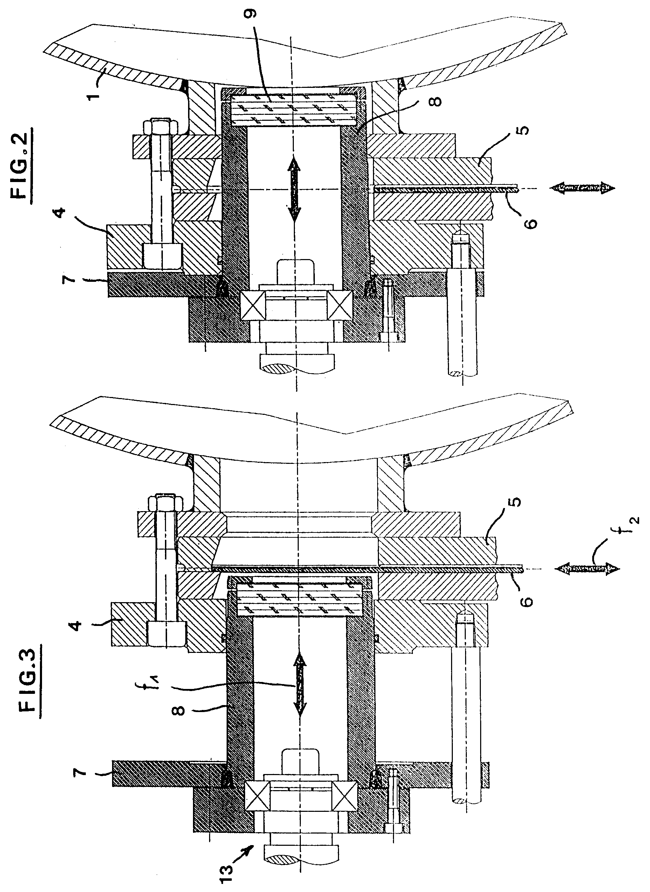

Zum Auswechseln oder Reinigen der Scheibe 9 wird das Meßgerät 11 abgenommen, und an den zweiten Flanschring 7 wird ein geeignetes Abziehgerät 13 angesetzt, um das Rohrstück 8 zusammen mit der Scheibe 9 in Richtung der durch den Doppelpfeil f1 repräsentierten Flanschöffnungsachse aus dem Flanschstutzen 2, 3 herausziehen zu können. Gemäß Figur 3 wird das mittels eines Dichtungsringes 14 abdichtend in dem ersten Flanschring 4 geführte Rohrstück 8 so weit herausgezogen, daß die Schieberplatte 6 des Schiebers 5 zum Verschließen der Flanschöffnung in den Schieber (Pfeil f2) eingeschoben werden kann. Danach kann das Rohrstück 8 ganz aus dem ersten Flanschstück 4 herausgezogen werden, um die Scheibe entweder zu reinigen oder durch Abnehmen des Befestigungsringes 10 ganz herauszunehmen und durch eine neue Scheibe zu ersetzen.

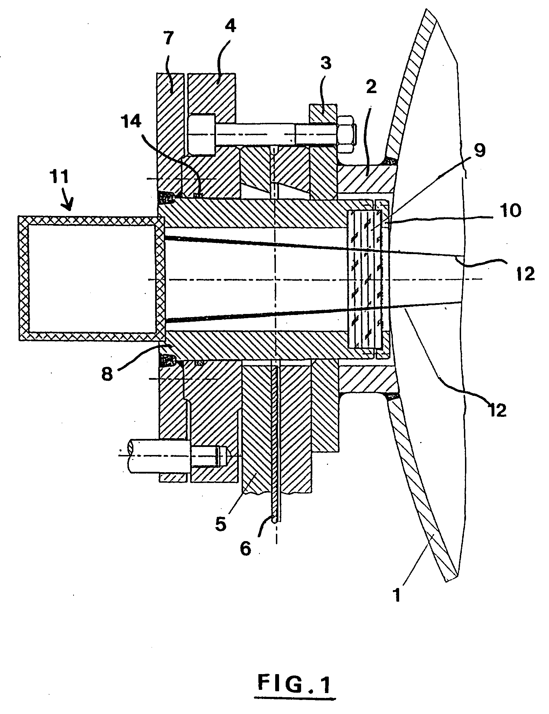

Das Einsetzen bzw. Einschieben des Rohrstückes 8 und damit der Scheibe 9 in die in den Figuren 1 und 2 dargestellte Ausgangs- und Meßstellung erfolgt in umgekehrter Richtung, wobei der Schieber 5 durch Zurückziehen der Schieberplatte 6 erst dann wieder geöffnet wird, wenn das Rohrstück 8 so weit in den ersten Flanschring 4 eingeschoben ist, daß ein abdichtender Verschluß der Flanschöffnung mittels des gegen den Außenmantel des Rohrstückes 8 anliegenden Dichtungsringes 4 gewährleistet ist.

Das Abziehgerät 13 ist so gestaltet, daß ein unbeabsichtigtes Herausdrücken des Rohrstückes 8 mit der darin eingesetzten Scheibe 9 aus der Flanschöffnung verhindert ist.

## Patentansprüche

1. Rohrleitungs-Pass-Stück mit mindestens einem am Rohrleitungsmantel angeordneten Flanschstutzen (2, 3) zum Anbringen einer transparenten oder durchsichtigen Scheibe (9), dadurch gekennzeichnet, daß an dem Flanschstutzen (2, 3) ein Schieber (5) mit einer senkrecht zur Flanschöffnung verschiebbaren Schieberplatte (6) angeflanscht ist, und daß die Scheibe (9) am vorderen Ende eines in Richtung der Flanschöffnungsachse beweglichen, eine Scheibenhalterung bildenden Rohrstückes (8) angebracht ist.

2. Rohrleitungs-Pass-Stück nach Anspruch 1, dadurch gekennzeichnet, daß der Schieber (5) an dem Flanschstutzen (2, 3) mittels eines ersten Flanschringes (4) angeschraubt ist, an dem ein am hinteren Ende eines Rohrstückes (8) befestigter zweiter Flanschring (7) festschraubbar ist.

3. Rohrleitungs-Pass-Stück nach Anspruch 2, dadurch gekennzeichnet, daß das Rohrstück (8) abdichtend in dem ersten Flanschring (4) geführt ist.

4. Rohrleitungs-Pass-Stück nach Anspruch 1, dadurch gekennzeichnet, daß das hintere Ende des Rohrstückes (8) eine Aufnahme zum Ansetzen eines Meßgerätes, insbesondere eines opto-elektronischen Volumenstrom-Meßgerätes (11), aufweist.

5. Rohrleitungs-Pass-Stück nach Anspruch 1, dadurch gekennzeichnet, daß das Rohrstück (8) einen zylindrischen Querschnitt hat.

6. Rohrleitungs-Pass-Stück nach Anspruch 2, dadurch gekennzeichnet, daß der zweite Flanschring (7) Mittel zum Ansetzen eines Gerätes (13) zum Abziehen dieses zweiten Flanschringes (7) von dem ersten Flanschring (4) enthält.

7. Rohrleitungs-Pass-Stück nach einem der Ansprüche 1 bis 3, dadurch gekennzeichnet, daß es Teil eines opto-elektronischen Volumenstrom-Meßgerätes, insbesondere Laser-Doppler-Velocimeters ist, weiches am hinteren Ende des Rohrstückes (8) ansetzbar ist.
